# EUROPÄISCHE PATENTSCHRIFT

(11) **EP 2 786 655 B1**
(45) Veröffentlichungstag und Bekanntmachung des Hinweises auf die Patenterteilung: **30.03.2016**
(21) Anmeldenummer: 14163771.0
(22) Anmeldetag: 10.06.2010
(51) Int. Cl.: A01K 29/00, A61D 17/00

(54) **Optisch gestützte Nutztierortungsvorrichtung und Verfahren zur Geburtserfassung und Geburtsüberwachung**
Optically assisted livestock location device and method for monitoring of a birthing process
Dispositif d'orientation d'animaux d'élevage dotÀ© d'une assistance optique et procédé de surveillance de parturition

(30) Priorität: 10.06.2009 DE 202009008268 U
(43) Veröffentlichungstag der Anmeldung: 08.10.2014
(62) Teilanmeldung aus: 10165498.6
(73) Patentinhaber: Big Dutchman Pig Equipment GmbH, 49377 Vechta (DE)
(72) Erfinder: Holling, Daniel, 49626 Berge (DE); Müller, Henning, 49377 Vechta (DE); Kruse, Klaus, 49565 Bramsche (DE)
(74) Vertreter: Eisenführ Speiser

(56) Entgegenhaltungen:
- EP-A1- 1 212 939
- EP-A1- 1 900 278
- WO-A1-2005/034618
- FR-A1- 2 666 734

## Beschreibung

Diese Anmeldung ist eine Teilungsanmeldung aus EP 2260699 A1. Die durch die Beschreibung, die Ansprüche und die Figuren der Anmeldung EP 2260699A1 definierte Offenbarung wird hiermit durch Bezugnahme in die Offenbarung dieser Teilungsanmeldung einbezogen.

Die Erfindung betrifft eine Vorrichtung zur Erfassung eines Geburtsvorgangs bei. Ein weiterer Aspekt der Erfindung ist ein Verfahren zur Tierortung und -identifikation.

Vorrichtungen und Verfahren zur Tierortung werden insbesondere in der modernen Nutztierhaltung eingesetzt, um aus einer größeren Menge von Nutztieren ein bestimmtes Nutztier zu identifizieren, beispielsweise um dieses nach erfolgter Identifikation einer tiermedizinischen Untersuchung oder Behandlung zu unterziehen, eine besondere Futtergabe zu verabreichen, es einem anderen Aufenthaltsbereich zuzuführen oder dgl. Unter einem Tierortungsvorgang soll hierbei ein Vorgang verstanden werden, bei dem in reproduzierbarer Weise aus einer Mehrzahl von Tieren, die im Wesentlichen gleiche Körpergrößen, Farbgebungen und sonstige Körpermerkmale aufweisen können, ein einzelnes, bestimmtes Tier herausgefunden wird. Im Zuge einer solchen Tierortung ist es insbesondere erforderlich, das richtige Tier zu finden.

Es ist grundsätzlich bekannt, Nutztiere mittels einer individuellen Kodierung, die beispielsweise eintätowiert, eingebrannt, in sonstiger Weise auf die Haut des Tieres aufgebracht wird oder die in Form eines am Tier befestigten Bandes, Ringes mit eingeprägter oder aufgedruckter Kodierung, wie beispielsweise einem bei Vögeln eingesetzten Fußring, oder mittels eines mithilfe eines separaten Lesegerätes lesbaren Kodierungsträgers,wie beispielsweise einem RFID-Tag, der dem Tier unter die Haut implantiert, als "Knopf im Ohr" oder in anderer Weise befestigt wird, zu charakterisieren. Auf diese Weise kann jedem Tier ein individuelles und für den Nutztierhalter in sicherer Weise zu unterscheidendes Charakterisierungsmerkmal gegeben werden, anhand dessen das Tier in eindeutiger Weise identifizierbar ist. Allerdings steht dieser Vorgehensweise bei der TierOrtung eine Reihe von Nachteilen gegenüber. So ist die jeweils erforderliche individuelle Anbringung des charakterisierenden Merkmals an jedes Nutztier ein aufwändiger Vorgang und insbesondere die kostengünstigen Charakterisierungsmerkmale können durch Verschmutzung unlesbar werden, was die TierOrtung verhindern kann. Zudem kann durch Verlust des charakterisierenden Merkmals ein Tier nicht mehr identifizierbar sein, was diese Vorgehensweise bei der TierOrtung insbesondere bei einer großen Anzahl von Tieren, die gemeinsam gehalten werden, und den dabei auftretenden mechanischen Belastungen auf die am Tier befestigten charakterisierenden Merkmale unsicher macht.

Schließlich ist ein weiterer entscheidender Nachteil dieser vorbekannten TierOrtungsverfahren, dass es zum Auffinden eines bestimmten Tieres in einer Gruppe von mehreren Tieren notwendig werden kann, dass mehrere oder im ungünstigsten Falle alle Tiere zunächst identifiziert werden müssen, bevor auf der so durchgeführten Suche das letztlich gesuchte individuelle einzelne Tier aufgefunden wird. Dies macht die TierOrtung für den Nutztierhalter zeitlich aufwändig und erfordert häufig eine mit der TierOrtung einhergehende Sortierung der Tiere, um MehrfachOrtungen ein und desselben Tieres oder das versehentliche Übersehen und Auslassen eines einzelnen Tieres im Zuge der Suche zu verhindern.

Aus DE 10 2006 048 321 A1 ist es bekannt, Tiere anhand von einzelnen, mittels einer Bilderfassung erkannten Körpermerkmalen zu identifizieren. Zwar kann mit einem solchen Ortungsverfahren vermieden werden, dass die Tiere noch mit einem individuellen Charakterisierungsmerkmal versehen werden müssen, jedoch hat sich das Verfahren als nicht ausreichend zuverlässig in der Differenzierung einer größeren Anzahl von Tieren erwiesen, wenn mit einer für Verarbeitungszwecke zumutbaren Datenmenge bei der Bilderfassung gearbeitet wird bzw. das Verfahren erfordert die Verarbeitung sehr hoher Datenmengen, wenn eine höhere Sicherheit bei der TierOrtung erzielt werden soll. Jedoch wird auch dann nicht eine zweifelsfreie TierOrtung in größeren Nutztierhaltungen erreicht. Das Verfahren der TierOrtung anhand einer Bilderfassung eignet sich darüber hinaus auch nur zur Ortung eines einzelnen Tieres, so dass auch hier zum Auffinden eines bestimmten individuellen Tieres aus einer Mehrzahl von Tieren es erforderlich wird, mehrere, im ungünstigsten Falle alle Tiere zu identifizieren, bis das einzelne, individuell gesuchte Tier identifiziert und somit gefunden wird. Da der Bilderfassungsvorgang in einer vorbestimmten Ausrichtung des Tieres zur Bilderfassungsvorrichtung erfolgen muss, um eine sichere Erfassung der differenzierenden Merkmale zu gewährleisten, ist die einzelne TierOrtung bei diesem Vorgehen zeitlich aufwändiger als bei anderen, vorbekannten Verfahren, so dass die insgesamt erforderliche Zeit zum Auffinden eines einzelnen, individuellen Tieres aus einer Mehrzahl von Tieren noch größer ist als bei den vorbekannten Verfahren.

Aus EP 1 212 939 A1 ist ein Farmmanagement-System vorbekannt. Bei diesem System ist eine Mehrzahl von Kameras vorgesehen, die mit einem Computer zur Übersendung von Bildsignalen verbunden sind. Die Kameras sind so angeordnet, dass wenigstens ein Tier an jeder Position in einem vorbestimmten Bereich der Farm beobachtet werden kann. Der Computer ist ausgebildet, um die Bildsignale der Kameras in Kombination zu verarbeiten zur Überwachung des wenigstens einen Tieres in dem Bereich auf der Basis des Bildes des Tieres selbst, abgegrenzt von jeglichen anderen Tieren, die sich in dem Bereich aufhalten. In EP 1 212 939 A1 ist hierzu beschrieben, dass es so möglich ist, zu jedem Zeitpunkt zu bestimmen, wo das Tier in der Farm sich befindet.

Die Erfindung betrifft eine Tierortungsvorrichtung, insbesondere zur Ortung von Nutztieren, umfassend: eine Bilderfassungseinrichtung, welche ausgebildet ist, um innerhalb eines Tieraufenthaltsbereichs eine Mehrzahl von Tieren in Zeitabständen zu erfassen, eine Datenverarbeitungseinrichtung, welche mit der Bilderfassungsvorrichtung signaltechnisch verbunden ist und ausgebildet ist, um mehrere von der Bilderfassungseinrichtung in aufeinanderfolgenden Bilderfassungen erfasste Tiere zu verfolgen und so deren jeweiligen Aufenthaltsort zu ermitteln, mehrere Tiere, die in einer ersten Bilderfassung innerhalb einer einzigen Kontur erfasst wurden und in einer der ersten Bilderfassung nachfolgenden zweiten Bilderfassung als zwei oder mehr getrennte Konturen erfasst wurden, einander zuzuordnen, den Zeitpunkt, zu dem aus der einen einzigen Kontur zwei Konturen werden, zu speichern und an eine Datenausgabeeinheit weiterzugeben.

Mit dieser so ausgeführten Tierortungsvorrichtung ist es möglich, einen Geburtsvorgang in einem Stallbereich zu erfassen und zu überwachen. Grundsätzlich stehen zum Erkennen und Überwachen von Geburten im Nutztierbereich verschiedene Verfahren zu Verfügung, die sich teilweise an diagnostische Verfahren der Humanmedizin anlehnen oder daraus ableiten. Allerdings haben diese Verfahren den Nachteil, dass sie einerseits in der Anwendung für den Nutztierbereich entweder nicht zuverlässig arbeiten, darüberhinaus oftmals eine zu umfangreiche Datensammlung betreiben und im Betrieb zu aufwendig sind und damit sowohl in der Anschaffung als auch im Betrieb der entsprechenden Einrichtungen unwirtschaftlich sind. Ein weiterer Nachteil besteht darin, dass diese vorbekannten Einrichtungen zur Geburtserfassung und -überwachung es regelmäßig erfordern, dass an dem Tier, welches vor einer Geburt steht, diagnostische Einrichtungen gezielt und fachmännisch platziert und ausgerichtet werden müssen, die einerseits empfindlich gegenüber Beschädigungen sind und andererseits eine ruhige Haltung des Tieres erfordern, wodurch sie nicht immer zuverlässig funktionieren.

Erfindungsgemäß wird zur Geburtserfassung und -Überwachung ein anderer Weg gegangen, indem eine Bilderfassung erfolgt. Eine Geburt zeichnet sich nach Erkenntnis der Erfinder dabei dadurch aus, dass aus einer zunächst isolierten einzigen Kontur eines trächtigen Tieres zwei Konturen eines Muttertieres und eines neugeborenen Tieres werden, die sich mittels der Bilderfassung separat auflösen und erkennen lassen. Die Bilderfassungseinrichtung und mit ihr signaltechnisch gekoppelte Datenverarbeitungseinrichtungen kann dabei einerseits dazu ausgebildet sein, um die Aufteilung einer Kontur in zwei Konturen zu erfassen, andererseits kann sie auch anhand der Kontur oder Größe der zweiten Kontur und ihrer Position in Bezug auf die Kontur des Muttertieres einen Geburtsvorgang erkennen.

Der so erfasste Geburtsvorgang kann dann in vielfältiger Weise signaltechnisch und datentechnisch weiter verarbeitet werden. Einerseits ist es möglich, den Geburtsvorgang durch eine Datenübertragung einem Benutzer der Vorrichtung, beispielsweise dem Landwirt, anzuzeigen, um ihn zu informieren, wobei insbesondere auch eine Datenfernübertragung auf drahtlosem Wege genutzt werden kann, um dem Benutzer diese Anzeige auf ein mobiles Gerät, beispielsweise einen mobilen Computer, ein Telefon oder dergleichen zu übertragen und dort anzuzeigen. Zum anderen kann die Erfassung der Geburt in eine stallinterne Datenverarbeitung eingespeist werden, um hierdurch ein aktuelles Stallmanagement zu betreiben und in diesem Zusammenhang können insbesondere weitere, hierfür relevante Daten, beispielsweise eine Identifikationsnummer des Muttertieres, die Anzahl der geborenen Tiere, der Zeitpunkt der Geburt und dergleichen mitübermittelt werden.

Dabei ist unter der Trennung von einer einzigen Kontur in zwei Konturen in erfindungsgemäßem Sinne ein durch die Bilderfassung erfasster Vorgang zu verstehen, der das Enstehen von zwei vollständig oder weitestgehend getrennten Konturen aus einer einzigen Kontur ermittelt. Diese Auftrennung in zwei Konturen kann insbesondere auch von der Bilderfassung solcher Art ausgewertet und ermittelt werden, dass hierbei eine zwar insgesamt noch zusammenhängende Kontur erkannt wird, die aber sich in einer eindeutigen Weise in zwei flächenmäßig oder volumetrisch ausgeprägte große Bestandteile unterteilen lässt, die durch eine schmale, in die Kontur eingeschlossene Verbindung miteinander verbunden sind.

Dieser Aspekt der Erfindung kann fortgebildet werden, indem die Datenverarbeitungseinrichtung weiter ausgebildet ist, um den Zeitpunkt, zu dem aus der in der ersten Bilderfassung erfassten einen einzigen Kontur in einer der zweiten Bilderfassung nachfolgenden dritten Bilderfassung als drei getrennte Konturen erfasst wurden, zu speichern, den ersten Zeitabstand zwischen dem zweiten und der dritten Bilderfassung zu berechnen, und den ersten Zeitabstand mit vorgespeicherten Daten zu vergleichen und/oder einen zweiten Zeitabstand zwischen der dritten Bilderfassung und einer dieser nachfolgenden vierten Bilderfassung zu berechnen, die zu einem Zeitpunkt erfolgt ist, zu dem aus der in der ersten Bilderfassung erfassten einen einzigen Kontur vier getrennte Konturen erfasst wurden und den ersten Zeitabstand mit dem zweiten Zeitabstand zu vergleichen und/oder einen x-2ten Zeitabstand zwischen der x-1ten Bilderfassung und einer dieser nachfolgenden x-ten Bilderfassung zu berechnen, die zu einem Zeitpunkt erfolgt ist, zu dem aus der in der ersten Bilderfassung erfassten einen einzigen Kontur x getrennte Konturen erfasst wurden und den x-2ten Zeitabstand mit dem einem oder mehreren vorhergehend ermittelten Zeitabständen zu vergleichen, die berechneten Zeitabstände zu speichern und ein Signal an eine Datenausgabeeinheit weiterzugeben, wenn bei einem oder mehreren der Vergleiche eine Abweichung festgestellt wird, die größer als eine vorbestimmte zulässige Abweichung ist.

Mit dieser Fortbildung wird insbesondere eine Geburtsüberwachung erfindungsgemäß vorgesehen. Grundsätzlich geht die Erfindung hierbei von der Erkenntnis aus, dass ein Geburtsvorgang im Nutztierbereich in der Regel komplikationsfrei und ohne einen Geburtshilfeeingriff seitens eines Benutzers, eines herbeigerufenen Arztes oder dergleichen abläuft. Dieser komplikationsfreie Ablauf einer Geburt zeichnet sich nach Erkenntnis der Erfindung insbesondere dadurch aus, dass die in der Regel Mehrlingsgeburt durch regelmäßig Zeitabstände zwischen den einzelnen Geburten gekennzeichnet ist. Der Zeitabstand zwischen zwei einzelnen Geburtsvorgängen ist dabei typischerweise auch je nach Art und Rasse des Nutztiers vorbekannt und daher einem Vergleich mit vorbestimmten, abgespeicherten Zeitdaten zugänglich. Grundsätzlich kann daher ein komplikationsbehafteter Geburtsvorgang daran identifiziert werden, dass der Zeitabstand zwischen der ersten und zweiten Geburt nicht dem für die Nutztierart zu erwartenden Zeitabstand entspricht und in diesem Fall ein entsprechender Alarm ausgelöst werden, der einen geburtshelferischen Eingriff veranlasst. Alternativ oder zusätzlich hierzu kann auch der Zeitabstand zwischen erster und zweiter Geburt einerseits und zweiter und dritter Geburt andererseits miteinander verglichen werden und bei Überschreiten einer hierfür vorbestimmten und abgespeicherten Zeitdifferenz ein entsprechendes Alarmsignal ausgegeben. Dabei ist zu verstehen, dass zusätzlich oder alternativ auch der Zeitabstand zwischen jeglichen weiteren Geburten miteinander verglichen werden kann und bei Überschreiten einer vorbestimmten, abgespeicherten Zeitdifferenz zwischen diesen Zeitabständen ein entsprechendes Alarmsignal ausgelöst werden kann.

Dieser Aspekt der erfindungsgemäßen Vorrichtung ermöglicht es folglich, Geburtsvorgänge im Nutztierbereich mittels einer Bilderfassungsvorrichtung zuverlässig zu erfassen und zu überwachen und hierbei eine differenzierte Diagnostik im Hinblick auf etwaige Geburtskomplikationen durchzuführen. Dabei ist zu verstehen, dass neben der zuvor bezeichneten Fortbildung einer Zeiterfassung der Geburtsintervalle auch weitere Fortbildungen vorgesehen sein können.

So ist gemäß einer zweiten weiteren Fortbildung es insbesondere vorteilhaft, wenn die Datenverarbeitungseinrichtung auch ausgebildet ist, um die Bewegung der geborenen Tiere zu erfassen, insbesondere um zu erfassen, ob sich die geborenen Tiere überhaupt bewegen und ob sie eine typische Bewegungsrichtung, beispielsweise in Richtung einer Nahrungsaufnahme am Muttertier oder eine atypische Bewegungsrichtung vom Muttertier weg, ausführen.

Weiterhin kann vorteilhaft vorgesehen sein, dass die Datenverarbeitungseinrichtung ausgebildet ist, um die Anzahl der geborenen Tiere zu erfassen, zu speichern und ggf. an eine andere Datenverarbeitungseinrichtung zu übermitteln.

Weiterhin kann die erfindungsgemäße Vorrichtung ausgebildet sein, um die erfassten Bilder an eine andere Datenverarbeitungseinrichtung, beispielsweise einen anderen Computer, insbesondere einen mobilen Computer, ein mobiles Telefon, insbesondere ein mobiles Telefon mit Bildwiedergabeeinrichtung, zu übertragen, sobald ein Geburtsvorgang erfasst wird oder sobald eine Komplikation in einem Geburtsvorgang ermittelt wird.

Die erfindungsgemäße Vorrichtung kann weiterhin ausgebildet sein, um das Ende einer Geburt zu erfassen, beispielsweise anhand eines hierfür typischen Bewegungsmusters des Muttertieres oder anhand einer an dem Muttertier vor der Geburt diagnostisch festgestellten Anzahl an zu erwartenden Geburten und Vergleichen dieser vorab diagnostisch ermittelten Anzahl mit den während des gesamten Geburtsvorgangs gezählten Geburten oder anhand einer Bilderfassung und Detektion der Nachgeburt.

Grundsätzlich ist zu verstehen, dass die erfindungsgemäße Tierortungsvorrichtung auch weiter gebildet werden kann durch eine Merkmalserfassungsvorrichtung zum Erfassen eines tierindividuellen Merkmals, und weiterhin dadurch gekennzeichnet, dass die Datenverarbeitungseinrichtung, mit der Merkmalserfassungsvorrichtung signaltechnisch verbunden ist und ausgebildet ist, um ein von der Merkmalserfassungsvorrichtung erfasstes tierindividuelles Merkmal einem von der Bilderfassungseinrichtung erfassten Tier, welches sich im Bereich der Merkmalserfassungsvorrichtung befindet, zuzuordnen und das Tier so zu identifizieren, und um das identifizierte, vorzugsweise eine Mehrzahl von identifizierten Tieren in aufeinanderfolgenden Bilderfassungen der Bilderfassungseinrichtung zu verfolgen und so deren Aufenthaltsort zu ermitteln und gfs. eine Anzeigevorrichtung, welche ausgebildet ist, um einem Benutzer den Aufenthaltsort eines oder mehrerer erfasster Tiere anzuzeigen.

Mit dieser Fortbildung wird es möglich, ein Tier, welches anhand der Konturerkennung als gebärendes Tier erkannt wurde, eine Identifikationsnummer zuzuordnen und folglich auch eine Signalgebung und Datenübermittlung mit dieser Tieridentifikation durchzuführen sowie weiterhin gegebenenfalls den Standort des gebärenden Tieres weiterzuleiten und anzuzeigen.

Erfindungsgemäß ist auch ein Verfahren zur Geburtserfassung und Geburtsüberwachung, welches die Schritte aufweist: Aufnehmen mehrerer Bilderfassungen in einer Bilderfassungssequenz, Erfassen des Zeitpunkts, zu dem aus einer Kontur innerhalb dieser Bilderfassungssequenz zwei oder mehr Konturen werden, und Speichern dieses Zeitpunkts und ggf. Übermitteln des Zeitpunkts und anderer mit dieser Konturtrennung zusammenhängender Daten, wie beispielsweise einer Identifikationsnummer des der Kontur zugeordneten Muttertieres, der Anzahl der aus der einen Kontur entstandenen mehreren Konturen und der Zeitabstände zwischen den Konturtrennungen an eine Datenverarbeitungseinrichtung.

Eine bevorzugte Ausführungsform wird anhand der anhängenden Figuren beschrieben. Es zeigen:
- Fig. 1: eine schematische Seitenansicht einer in einem Stallbereich installierten erfindungsgemäßen Tierortungsvorrichtung,
- Fig. 2A-E: aufeinander folgende Bildsequenzen einer Bilderfassungseinrichtung der erfindungsgemäßen Tierortungsvorrichtung.

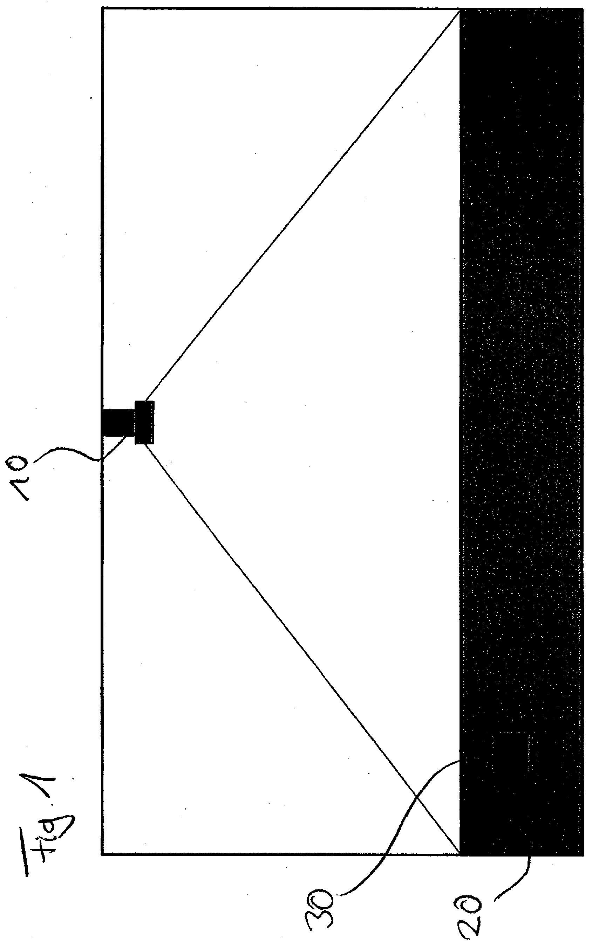

Wie in Fig. 1 zu erkennen, umfasst die erfindungsgemäße Tierortungsvorrichtung eine Bilderfassungseinrichtung 10, die als Videokamera ausgebildet ist und die oberhalb eines Tieraufenthaltsbereichs 20 angeordnet ist. Die Videokamera 10 hat eine senkrecht nach unten ausgerichtete Bildaufnahmerichtung und einen Bildwinkel, der den gesamten Tieraufenthaltsbereich einschließt. Der Tieraufenthaltsbereich ist im gezeigten Beispiel eine Schweinebucht, es ist jedoch zu verstehen, dass der Tieraufenthaltsbereich auch durch zwei oder mehrere nebeneinander angeordnete Schweinebuchten ausgestaltet sein kann. Insbesondere kann die Videokamera 10 genau oberhalb einer Trennwand zwischen zwei separaten Tieraufenthaltsbereichen angeordnet sein und beide Tieraufenthaltsbereiche mit ihrem Bildwinkel erfassen, so dass eine Verfolgung und Ortung von Tieren in beiden Schweinebuchten ermöglicht wird.

Im Tieraufenthaltsbereich ist an einer Seitenwand eine Merkmalserfassungsvorrichtung 30 angeordnet, die als Lesegerät für einen an jedem Tier befindlichen Transponder ausgebildet ist. Der Transponder jedes Tieres gibt an die Lesevorrichtung ein tierindividuelles Merkmal in Form eines individuellen Codes aus, wenn sich das Tier im unmittelbaren Bereich der Lesevorrichtung 30 befindet.

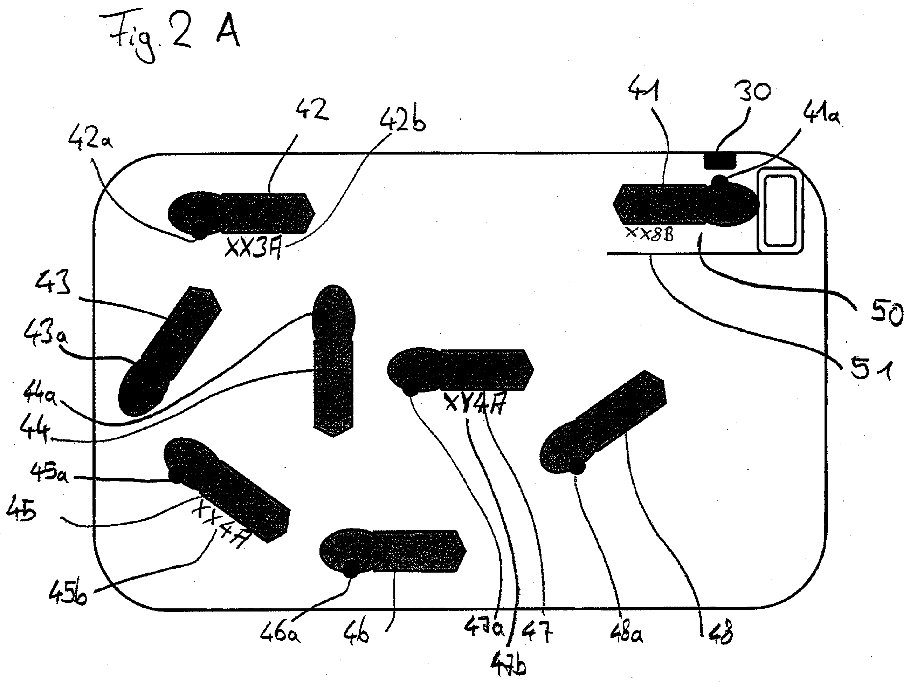

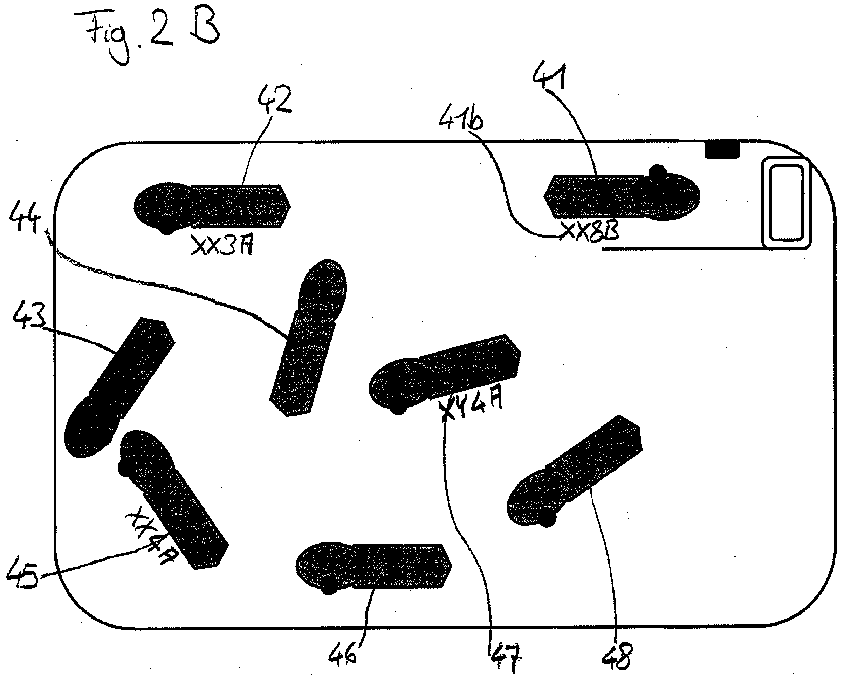

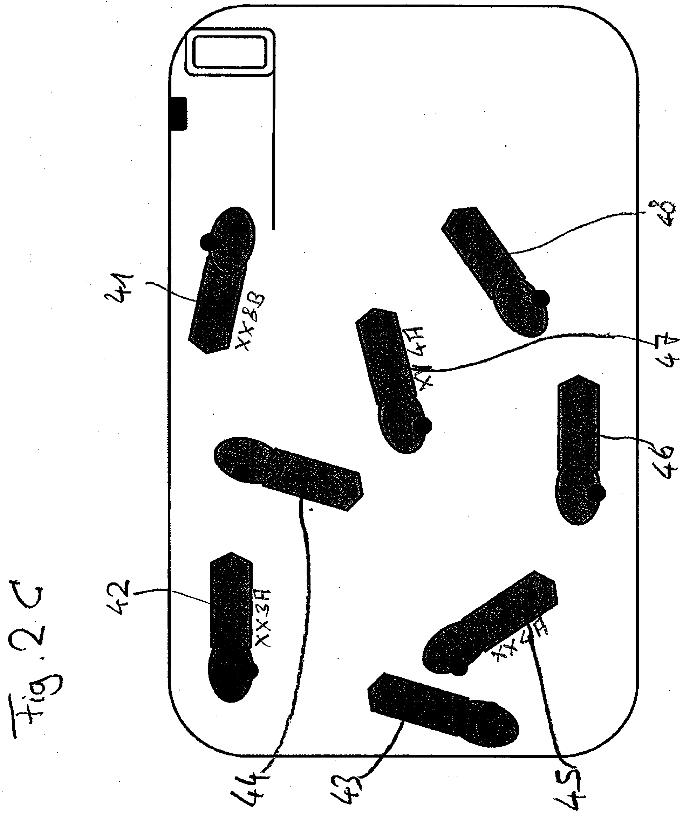

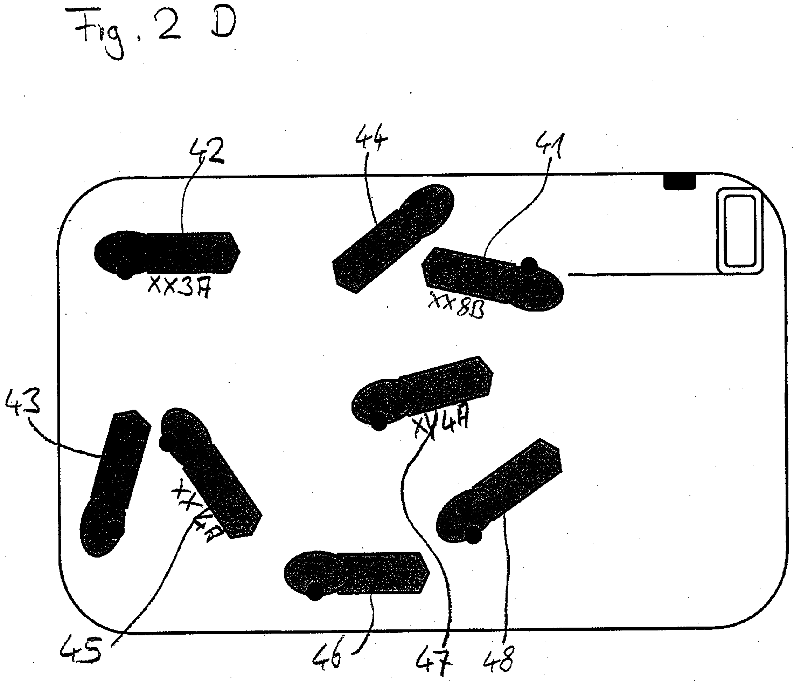

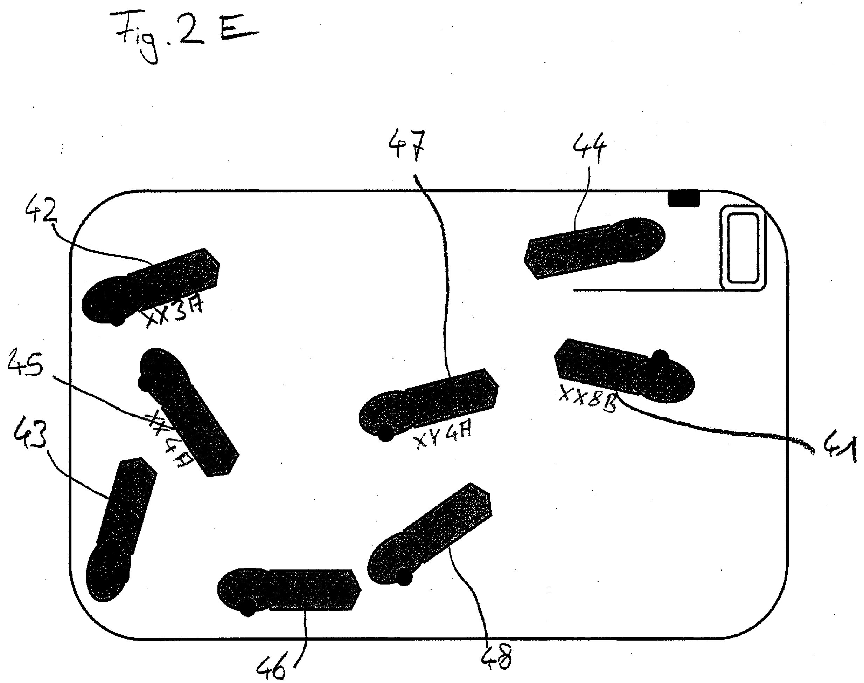

Fig. 2A zeigt eine erste Aufnahme einer Bilderfassungseinrichtung des von der Videokamera 10 überwachten Tieraufenthaltsbereichs. Die Abbildung gemäß Fig. 2A entspricht derjenigen Darstellung, die sich einem Benutzer auf einer als Bildschirm ausgebildeten Anzeigeeinrichtung darstellt, wenn er ein einzelnes Tier aus der Mehrzahl von Tieren finden möchte. Wie man erkennen kann, werden die von der Bilderfassungseinrichtung erfassten Bilddaten von einer Datenverarbeitungseinrichtung (nicht abgebildet) solcherart aufbereitet, dass jedes der Tiere als Umriss erfasst wird und auch als solcher Umriss, der die Ausrichtung des Tieres erkennen lässt, an den Benutzer ausgegeben wird. Jedes der Tiere 41-48 weist einen am Ohr befestigten Transponder auf, der dem Lesegerät 30 ein tierindividuelles Merkmal ausgeben kann.

Wie zu erkennen ist, befindet sich ein Tier 41 im Bereich eines Fressstandes 50, und da das Lesegerät 30 im Bereich des Fressstandes 50 angeordnet ist, kann von diesem Tier das tierindividuelle Merkmal vom Lesegerät 30 erfasst werden. Da sich aufgrund der Trennwand 51 nur jeweils genau ein Tier im Bereich des Fressstandes 50 aufhalten kann, kann das von der Lesevorrichtung 30 erfasste tierindividuelle Merkmal durch die Datenverarbeitungseinrichtung unmittelbar und eindeutig dem durch den Umriss erfassten Tier 41 zugeordnet werden.

Wie den nachfolgenden Bildsequenzen 2B-E zu entnehmen ist, werden die einzelnen Bilderfassungen der Bilderfassungseinrichtung in solchen Zeitabständen ausgeführt, dass sich die Tiere, wenn sie sich zwischen den beiden Bilderfassungen mit ihrer üblichen Geschwindigkeit bewegen, nur so weit von ihrem vorhergehenden Aufenthaltsort wegbewegt haben, dass sich der Umriss des Tieres in der vorhergehenden Aufnahme zu einem überwiegenden Teil mit dem Umriss des Tieres in der nachfolgenden Aufnahme überschneidet. Solche sich in zwei zeitlich aufeinander folgenden Bilderfassungen zu einem Großteil überschneidende Umrisse werden durch die Datenverarbeitungseinrichtung einem einzelnen Tier zugeordnet, das auf diese Weise verfolgt wird. Das dem Umriss der vorhergehenden Aufnahme zugeordnete tierindividuelle Merkmal wird dann auch dem Umriss der nachfolgenden Aufnahme zugeordnet. Auf diese Weise kann das tierindividuelle Merkmal dem Tier weiterhin zugeordnet bleiben, auch wenn es sich aus dem Bereich der Lesevorrichtung 30 entfernt, wie man anhand des Tieres 41 in den Aufnahmen 2A-E erkennen kann.

In dem dargestellten Ausführungsbeispiel sind die Tiere 42, 45 und 47 bereits zuvor im Fressstand gewesen und wurden folglich von der Lesevorrichtung hinsichtlich ihres tierindividuellen Merkmals erfasst, so dass diesen Tieren das jeweilige tierindividuelle Merkmal zugeordnet und auf der Anzeigevorrichtung durch einen entsprechenden Buchstabencode 42b, 45b, 47b angezeigt wird. Die übrigen Tiere 43, 44, 46, 48 waren noch nicht im Fressstand und sind folglich noch nicht hinsichtlich ihres tierindividuellen Merkmals erfasst.

Weiterhin kann man erkennen, dass sich die Tiere 43 und 45 auffällig verhalten, da sie in aufeinander folgenden Bildfolgen eng beisammen stehen. Dies lässt auf die Möglichkeit der gegenseitigen Verletzung dieser Tiere Rückschlüsse zu und die Tiere sind daher als verhaltensauffällig von der Datenverarbeitungseinrichtung klassifiziert worden und werden durch eine rote Farbhinterlegung in der Anzeigevorrichtung dargestellt.

Ein Benutzer der Vorrichtung kann daher mit einer mobilen Anzeigevorrichtung an die Schweinebucht herantreten und auf den ersten Blick ein bestimmtes, individuelles Tier bezüglich seines Aufenthaltsortes erkennen, wenn dieses zuvor identifiziert und weiterverfolgt wurde. Weiterhin kann ein Benutzer auf Anhieb verhaltensauffällige Tiere hinsichtlich ihres Aufenthaltsorts erkennen und überprüfen, ob tatsächlich eine Verhaltensauffälligkeit oder entsprechend hieraus resultierende Verletzungen vorliegen.

## Patentansprüche

1. Tierortungsvorrichtung, insbesondere zur Ortung von Nutztieren, umfassend:
- eine Bilderfassungseinrichtung (10), welche ausgebildet ist, um innerhalb eines Tieraufenthaltsbereichs eine Mehrzahl von Tieren in Zeitabständen zu erfassen,
- eine Datenverarbeitungseinrichtung, welche mit der Bilderfassungsvorrichtung signaltechnisch verbunden ist und ausgebildet ist, um
∘ mehrere von der Bilderfassungseinrichtung in aufeinanderfolgenden Bilderfassungen erfasste Tiere (43, 44, 45) zu verfolgen und so deren jeweiligen Aufenthaltsort zu ermitteln,
**dadurch gekennzeichnet, dass** die Bilderfassungsvorrichtung weiterhin ausgebildet ist, um
o mehrere Tiere, die in einer ersten Bilderfassung innerhalb einer einzigen Kontur erfasst wurden und in einer der ersten Bilderfassung nachfolgenden zweiten Bilderfassung als zwei oder mehr getrennte Konturen erfasst wurden, einander zuzuordnen,
o den Zeitpunkt, zu dem aus der einen einzigen Kontur zwei Konturen werden, zu speichern und an eine Datenausgabeeinheit weiterzugeben.

2. Tierortungsvorrichtung nach Anspruch 1,
**dadurch gekennzeichnet, dass** die Datenverarbeitungseinrichtung weiter ausgebildet ist, um
a. den Zeitpunkt, zu dem aus der in der ersten Bilderfassung erfassten einen einzigen Kontur in einer der zweiten Bilderfassung nachfolgenden dritten Bilderfassung als drei getrennte Konturen erfasst wurden, zu speichern,
b. den ersten Zeitabstand zwischen dem zweiten und der dritten Bilderfassung zu berechnen, und
i. den ersten Zeitabstand mit vorgespeicherten Daten zu vergleichen und/oder
ii. einen zweiten Zeitabstand zwischen der dritten Bilderfassung und einer dieser nachfolgenden vierten Bilderfassung zu berechnen, die zu einem Zeitpunkt erfolgt ist, zu dem aus der in der ersten Bilderfassung erfassten einen einzigen Kontur vier getrennte Konturen erfasst wurden und den ersten Zeitabstand mit dem zweiten Zeitabstand zu vergleichen und/oder
iii. einen x-2ten Zeitabstand zwischen der x-1ten Bilderfassung und einer dieser nachfolgenden x-ten Bilderfassung zu berechnen, die zu einem Zeitpunkt erfolgt ist, zu dem aus der in der ersten Bilderfassung erfassten einen einzigen Kontur x getrennte Konturen erfasst wurden und den x-2ten Zeitabstand mit dem einem oder mehreren vorhergehend ermittelten Zeitabständen zu vergleichen,
c. die berechneten Zeitabstände zu speichern und ein Signal an eine Datenausgabeeinheit weiterzugeben, wenn bei einem oder mehreren der Vergleiche eine Abweichung festgestellt wird, die größer als eine vorbestimmte zulässige Abweichung ist.

3. Tierortungsvorrichtung nach Anspruch 1 oder 2,
**gekennzeichnet durch**
- eine Merkmalserfassungsvorrichtung zum Erfassen eines tierindividuellen Merkmals, und weiterhin **dadurch** gekennzeichnet, dass
- die Datenverarbeitungseinrichtung, mit der Merkmalserfassungsvorrichtung signaltechnisch verbunden ist und ausgebildet ist,
o um ein von der Merkmalserfassungsvorrichtung erfasstes tierindividuelles Merkmal einem von der Bilderfassungseinrichtung erfassten Tier, welches sich im Bereich der Merkmalserfassungsvorrichtung befindet, zuzuordnen und das Tier so zu identifizieren, und
o um das identifizierte, vorzugsweise eine Mehrzahl von identifizierten Tieren in aufeinanderfolgenden Bilderfassungen der Bilderfassungseinrichtung zu verfolgen und so deren Aufenthaltsort zu ermitteln.

4. Tierortungsvorrichtung nach Anspruch 3,
**gekennzeichnet durch** eine Anzeigevorrichtung, welche ausgebildet ist, um einem Benutzer den Aufenthaltsort eines oder mehrerer erfasster Tiere anzuzeigen.

5. Verfahren zur Geburtserfassung und Geburtsüberwachung bei Nutztieren, mit den Schritten:
- Aufnehmen mehrerer Bilderfassungen in einer Bilderfassungssequenz (2B-2E),
- Erfassen des Zeitpunkts, zu dem aus einer Kontur innerhalb dieser Bilderfassungssequenz zwei oder mehr Konturen werden, und
- Speichern dieses Zeitpunkts.

6. Verfahren nach Anspruch 5, weiterhin umfassend den Schritt:
- Übermitteln des Zeitpunkts und anderer mit dieser Konturtrennung zusammenhängender Daten an eine Datenverarbeitungseinrichtung.

7. Verfahren nach Anspruch 6, **dadurch gekennzeichnet, dass** die anderen mit der Konturtrennung zusammenhängenden Daten
- eine Identifikationsnummer eines der Kontur zugeordneten Muttertieres umfasst.

8. Verfahren nach Anspruch 6 oder 7, **dadurch gekennzeichnet, dass** die anderen mit der Konturtrennung zusammenhängenden Daten
- die Anzahl der aus der einen Kontur entstandenen mehreren Konturen umfasst.

9. Verfahren nach Anspruch 6, 7 oder 8, **dadurch gekennzeichnet, dass** die anderen mit der Konturtrennung zusammenhängenden Daten
- die Zeitabstände zwischen den Konturtrennungen umfasst.

## Claims

1. Animal locating device, in particular for locating farm animals, comprising:
- an image detection device (10) configured to detect a plurality of animals within an animal holding area at time intervals,
- a data processing device connected to the image detection device so as to transmit signals and configured to
∘ track several animals (43, 44, 45) detected by the image detection device in successive image detection operations and thus determine their respective location,
**characterised in that** the image detection device is further configured to
∘ correlate with one another several animals that were detected within a single contour in a first image detection operation and which were detected as two or more separate contours in a second image detection operation following the first image detection operation,
∘ store and forward to a data output unit the time at which the one single contour became two contours.

2. Animal locating device as claimed in claim 1, **characterised in that** the data processing device is further configured to
a. store the time at which a single contour detected in the first image detection operation was detected as three separate contours in a third image detection operation following the second image detection operation,
b. calculate the first time interval between the second and the third image detection operation, and
i. compare the first time interval with previously stored data and/or
ii. calculate a second time interval between the third image detection operation and a fourth image detection operation following it which occurred at a time at which a single contour detected in the first image detection operation was detected as four separate contours and compare the first time interval with the second time interval and/or
iii. calculate a x-2nd time interval between the x-1st image detection operation and an x-th image detection operation following it which occurred at a time at which a single contour in the first image detection operation was detected as x separate contours and compare the x-2nd time interval with the one or several previously determined time intervals,
c. store the calculated time intervals and forward a signal to a data output unit if a variance is ascertained in one or more of the comparisons that is greater than a predefined permissible variance.

3. Animal locating device as claimed in claim 1 or 2, **characterised by**
- a characteristic detection device for detecting a characteristic individual to the animal, and further **characterised in that**
- the data processing device is connected to the characteristic detection device so as to transmit signals and is configured
o to correlate a characteristic individual to the animal detected by the characteristic detection device with an animal detected by the image detection device located in the region of the characteristic detection device and thus identify the animal, and
o to track the identified animal, preferably a plurality of identified animals, in successive image detection operations of the image detection device and thus determine their location.

4. Animal locating device as claimed in claim 3, **characterised by** a display device configured to display to a user the location of one or more detected animals.

5. Method of detecting birthing and monitoring birthing of farm animals comprising the steps:
- recording several image detection operations in an image detection sequence (2B-2E),
- detecting the time at which a contour within this image detection sequence becomes two or more contours, and
- storing this time.

6. Method as claimed in claim 5, further comprising the step:
- transmitting the time and other data relating to this contour separation to a data processing device.

7. Method as claimed in claim 6, **characterised in that** the other data relating to the contour separation comprises
- an identification number of a mother animal correlated with the contour.

8. Method as claimed in claim 6 or 7, **characterised in that** the other data relating to the contour separation comprises
- the number of the several contours created from the one contour.

9. Method as claimed in claim 6, 7 or 8, **characterised in that** the other data relating to the contour separation comprises
- the time intervals between the contour separations.

## Revendications

1. Dispositif de localisation d'animaux, plus particulièrement d'animaux d'élevage, comprenant :
- un dispositif de capture d'images (10) conçu pour détecter, à l'intérieur d'une zone de séjour des animaux, une pluralité d'animaux à des intervalles de temps déterminés,
- un dispositif de traitement de données relié, à l'aide de signaux, avec le dispositif de détection d'images et conçu pour
- suivre plusieurs animaux (43, 44, 45) détectés par le dispositif de capture d'images dans des captures d'images successives et déterminer leur lieu de séjour, **caractérisé en ce que** le dispositif de capture d'images est en outre conçu pour
- associer plusieurs animaux, qui ont été détectés dans une première capture d'images à l'intérieur d'un seul contour et dans une deuxième capture d'image suivant la première capture d'image, sous la forme de deux contours distincts ou plus,
- enregistrer le moment auquel un seul contour se transforme en deux contours et le transmettre à une unité de sortie de données.

2. Dispositif de localisation d'animaux selon la revendication 1,
**caractérisé en ce que** le dispositif de traitement de données est en outre conçu pour
a. enregistrer le moment auquel, à partir du seul contour détecté dans la première capture d'image, trois contours distincts ont été détectés dans une troisième capture d'image suivant la deuxième capture d'image,
b. calculer le premier intervalle de temps entre la deuxième et la troisième capture d'image et
i. comparer le premier intervalle de temps avec des données préenregistrées et/ou
ii. calculer un deuxième intervalle de temps entre la troisième capture d'image et une quatrième capture d'image suivant celle-ci, qui a eu lieu à un moment auquel, à partir du seul contour détecté dans la première capture d'image, quatre contours distincts ont été détectés et comparer le premier intervalle de temps avec le deuxième intervalle de temps et/ou
iii. calculer un x-2^{ème} intervalle de temps entre la x-1^{ère} capture d'image et une x^{ème} capture d'image suivant celle-ci, qui a eu lieu à un moment auquel, à partir d'un seul contour détecté dans la première capture d'image, x contours distincts ont été détectés et comparer le x-2^{ème} intervalle de temps avec un ou plusieurs intervalles de temps déterminés précédemment,
c. enregistrer les intervalles de temps calculés et transmettre un signal à une unité de sortie de données si un écart est déterminé lors d'une ou plusieurs comparaisons, qui est supérieur à un écart admissible prédéterminé.

3. Dispositif de localisation d'animaux selon la revendication 1 ou 2, **caractérisé par**
- un dispositif de détection de caractéristiques pour la détection d'une caractéristique spécifique à un animal et en outre **caractérisé en ce que**
- le dispositif de traitement de données est relié à l'aide de signaux avec le dispositif de détection de caractéristiques et conçu
- pour attribuer une caractéristique spécifique à un animal, détectée par le dispositif de détection de caractéristiques, à un animal détecté par le dispositif de capture d'image, qui se trouve au niveau du dispositif de détection de caractéristiques et d'identifier ainsi l'animal et
- pour suivre l'animal identifié, de préférence une pluralité d'animaux identifiés dans des captures d'images successives du dispositif de capture d'images et déterminer ainsi leur lieu de séjour.

4. Dispositif de localisation d'animaux selon la revendication 3, **caractérisé par** un dispositif d'affichage conçu pour afficher, à l'attention d'un utilisateur, le lieu de séjour d'un ou plusieurs animaux détectés.

5. Procédé de détection de naissance et de surveillance de naissance pour des animaux d'élevage, comprenant les étapes suivantes :
- enregistrement de plusieurs captures d'images dans une séquence de captures d'images (2B-2E),
- détection du moment auquel un contour à l'intérieur de cette séquence de captures d'images se transforme en deux contours ou plus, et
- enregistrement de ce moment.

6. Procédé selon la revendication 5, comprenant en outre l'étape suivante :
- transmission du moment et d'autres données correspondant à cette séparation de contour à un dispositif de traitement de données.

7. Procédé selon la revendication 6, **caractérisé en ce que** les autres données correspondant à la séparation des contours
- comprennent un numéro d'identification d'un animal-mère correspondant au contour.

8. Procédé selon la revendication 6 ou 7, **caractérisé en ce que** les autres données correspondant à la séparation de contour
- comprennent le nombre de contours générés à partir d'un contour.

9. Procédé selon la revendication 6, 7 ou 8, **caractérisé en ce que** les autres données correspondant à la séparation de contour
- comprennent les intervalles de temps entre les séparations de contours.
